# EUROPEAN PATENT SPECIFICATION

(11) **EP 0 307 059 B1**
(45) Date of publication and mention of the grant of the patent: **28.04.1993**
(21) Application number: 88201963.1
(22) Date of filing: 08.09.1988
(51) Int. Cl.: C08F 8/00, C09D 11/10

(54) **Resin composition and application thereof in printing ink compositions**
Harzzusammensetzung und Verwendung zu Druckfarbenzusammensetzungen
Composition de résine et application aux compositions d'encre d'imprimerie

(30) Priority: 10.09.1987 NL 8702153
(43) Date of publication of application: 15.03.1989
(73) Proprietor: DSM N.V., 6411 TE Heerlen (NL)
(72) Inventor: Chassereau, Daniel, F-79340 Menigoute (FR); Salemis, Philippe, NL-8032 XX Zwolle (NL)

(56) References cited:
- EP-A- 0 077 594
- DE-A- 2 347 843
- DE-A- 2 658 857
- FR-A- 1 396 452
- FR-A- 2 120 965
- FR-A- 2 154 216
- FR-A- 2 212 406
- FR-A- 2 387 249
- US-A- 4 169 821
- US-A- 4 574 057

## Description

The invention relates to a resin composition on the basis of substantially vinyl aromatic hydrocarbon monomers with 8-12 carbon atoms and acids, and to application of this resin composition in printing inks.

Such a resin composition is known from EP-A-77594. Said publication describes partly esterified and partly neutralized addition products of hydrocarbon resins based on a C₉ hydrocarbon monomer and unsaturated dicarboxylic acids.

Printing inks usually are suspensions of one or more finely dispersed solid pigments in a solution (of a suitable fluidity) of a binding agent functioning both as substrate and as filmforming agent. Resins used as binding agent in printing ink compositions are to enclose the pigment particles, give the printing ink a viscosity and/or tack suitable for its processing, and ensure that the pigment particles remain well wetted and that they are, through pounding, permanently anchored to the material to be imprinted. The ink should have a good runability for both press and paper, in other words its rheology is to meet exact requirements (misting, plucking, crawling). Furthermore, as regards adhesion and drying it is important that for example there be no blocking, chalking and blurring. As regards performance in use, the ink must, for instance, be nonfading, resistant to moisture, chalk, scratches, chemicals and heat, and capable of being sterilized and deepdrawn. For environmental reasons, various solvents, such as aromatic ones, are to be replaced, and as a consequence binding agents are currently required to be well soluble in aliphatic hydrocarbons used as solvent in intaglio and offset printing.

A drawback of the known resin composition of EP-A-77594 is that the printing inks based on this resin do not combine the desired solubility in aliphatic solvents with the desired gelation capacity.

The object of the invention is to provide a resin composition on the basis of substantially vinyl aromatic hydrocarbon atoms with 8-12 carbon atoms and acids which gives printing inks based on this resin composition both the desired solubility in aliphatic hydrocarbons and the desired gelation capacity, all other properties being retained.

The resin composition according to the invention is characterized in that the resin composition contains 4-20 wt.% of an alkyl group with 12-24 carbon atoms and obtainable by ionic or radical polymerisation of the vinylaromatic resin or vinylaromatic monomers in the presence of unsaturated fatty acids.

According to a preferred embodiment of the invention the resin composition has an acid number of less than 30 mg KOH/gr.

It is extremely surprising for the application of such a low acid number in combination with the presence of an alkyl group with 12-24 carbon atoms to result in a resin composition that is capable of gelation, following which it provides to the printing ink into composition additionally the desired printing ink properties such as for example yield stress, optical density and tack.

According to a further preferred embodiment of the invention the acid number of the resin composition is 1-14 mg KOH/gr, in particular 8-12 mg KOH/gr.

According to an other preferred embodiment of the invention the resin composition contains 8-15 wt.% of an alkyl group with 12-24 carbon atoms.

As vinyl aromatic monomers by preference use is made of styrene, α-methylstyrene, ortho-, meta- or para-methylstyrene, vinyltoluene, indene and methylindene or mixtures thereof. The resin composition according to the invention furthermore contains less than 15 wt.%, preferably 2-8 wt.%, dicyclopentadiene.

The monomers preferably are polymerized cationically. In such a polymerization, monomers containing at least 1 double bond are polymerized cationically with the aid of a cation-active polymerization catalyst, for instance a Bronsted acid or a Lewis acid. Examples of monomers that may, in minor amounts, i.e. less than 20 wt.%, be present, besides the vinyl aromatic hydrocarbon monomers and dicyclopentadiene already mentioned, are aliphatic alkamonoenes with 4-12 carbon atoms, for instance butene, pentene or hexene, aliphatic alkadienes with 4-12 carbon atoms, for instance butadiene or isoprene, and unsaturated alicyclic hydrocarbons with 5-15 carbon atoms, for instance cyclopentadiene, methyldicyclopentadiene, norbornene, alkylnorbornene, alkenyl-norbornene or mixtures thereof.

According to a preferred embodiment of the invention, use can also be made of a fraction with a boiling point between 40¤C and 300¤C which contains unsaturated hydrocarbon monomers, preference being given to a fraction with a boiling point between 100¤C and 220¤C that contains between 40 and 80 wt.% aromatic hydrocarbon monomers, which are obtained as byproducts in cracking or reforming of petroleum.

Large amounts of unsaturated hydrocarbons are present in a fraction boiling above 140¤C that contains at least 8 carbon atoms and that has been prepared from hydrocarbon fractions by continuous fractionated distillation, by which a fraction with 1-7 carbon atoms is removed. A fraction boiling between 100¤C and 220¤C may contain the following polymerisable polymers:

| | |
|---|---|
| 1) styrene and derivatives | 0.5 - 10 wt.% |
| 2) vinyltoluene | 5 - 25 wt.% |
| 3) indene and derivatives | 10 - 30 wt.% |
| 4) other | 5 - 15 wt.% |

The resinous polymer composition applied according to the invention can be polymerized in any known way using, for instance, Friedel-Crafts polymerization catalysts, for instance aluminium halides, titanium halides, tin halides, boron fluoride, and complexes of boron fluorides with alcohols, phenols, carboxylic acids or ethers.

This polymerization may, if desired, take place in the absence of a solvent, or in an inert organic solvent, such as an aliphatic or aromatic hydrocarbon, e.g. hexane, heptane, pentane, toluene or xylene. The polymerization can be effected at temperatures between, for instance, -30¤C and 100¤C and preferably between 20¤C and 50¤C. The polymerization time is not critical, either, and may vary between 0.5 and 10 hours, while the polymerization can be effected at atmospheric, reduced or elevated pressures (for instance between 0.1 and 1000 Pa.s).

In view of the exothermic nature of the reaction it may he advisable to add the catalyst slowly. Special measures may be needed to control the temperature during the reaction so as to obtain good and reproducible technical results. The reaction mixture is kept at the desired reaction temperature for several hours, after which the catalyst is destroyed, preferably by addition of a base and by washing, following which the volatile substances, e.g. solvent and any non-converted starting material, are removed.

The weight average molecular weight of the polymers preferably is between 400 and 2000.

The resin composition according to the invention consequently has by preference an acid number below 30 mg KOH/gr, more preferably 1-14 mg KOH/gr, and contains 4-20 wt.% of an alkyl group with 12-24 carbon atoms. Such a resin composition is prepared by reacting during or after polymerization of the vinyl aromatic monomers, the resin and/or the monomers with 4-20 wt.% unsaturated fatty acids through ionic or radical polymerization. The unsaturated fatty acids preferably contain C₁₄ - C₂₀ carbon atoms. Examples of suitable unsaturated fatty acids, which may be applied by themselves or in combination, are tall oil fatty acid, castor oil fatty acid, crotonic acid, oleic acid, linseed oil fatty acid, linoleic acid and linolenic acid. By preference use is made of tall oil fatty acid.

The mentioned suitable unsaturated fatty acid can be applied in combination with rosin (derivatives).

The gelation capacity of the reactive resin composition according to the invention is obtained by addition of aluminium-containing organic compounds such as aluminium-containing soaps, for instance aluminium octoate and aluminium stearate, aluminium-containing alkoxides, for instance aluminiun isopropoxide and aluminium butoxide, aluminium chelates and oxyaluminium acylates, for instance oxyaluminium octoate, or mixtures thereof. These aluminium-containing organic compounds can be applied in amounts between 0.5 and 20 wt.%, preferably between 1.0 and 5.0 wt.%.

Such a measure, it is true, is known from US-A-4574057, but in that patent publication a resin composition on the basis of an excess of dicyclopentadiene is described. This type of resin is chemically very different from the resins according to the invention, among other things because of the difference in aromatic character of the monomers, because of the difference in ethylenic unsaturation and because of the better solubility in aliphatic solvents of the resins in US-A-4574057.

The invention also relates to a printing ink composition on the basis of the resin composition, one or more pigments, for instance organic pigments, one or more aliphatic solvents and other customary additives, as resin composition use being made of the composition as described in the preceding.

The invention will be elucidated with reference to the following examples.

### Examples I-V: Resin compositions

### Example I

Five parts by weight of tall oil fatty acid with an acid numher of 160 and a iodine number of 135 and 25 parts by weight of toluene were added to 95 parts by weiqht of a cracked petroleum fraction (with 60% polymerizable components), consisting of 1.3 wt.% styrene, 2.3 wt.% α-methylstyrene, 5 wt.% dicyclopentadiene, 18.5 wt.% vinyltoluene, 21.7 wt.% indene and 6.2 wt.% methylindene. Subsequently, as catalyst 1 wt.% of gaseous boron trifluoride was added, after which the mixture reacted during 6 hours at 35¤C.

After removal of the catalyst and, by distillation, of solvent and non-reacted components, a resin with the following properties was obtained:

| | |
|---|---|
| acid number | 7.5 |
| softening point | 125¤C ¹⁾ |
| colour | 18 ²⁾ |
| viscosity | 0.25 dPa.s ³⁾ |

| | |
|---|---|
| ¹⁾ measured acording to ASTM-E-28 | |
| ²⁾ measured according to Gardner, ASTM-D-1544 | |
| ³⁾ 1 : 1, toluene, 23¤C | |

### Example II

Example I was repeated, use now being made of 97.5 parts by weight of petroleum fraction and 2.5 parts by weight of tall oil fatty acid instead of 95 and 5 parts by weight, respectively.

The resin had the following properties:

| | |
|---|---|
| acid number | 4 |
| softening point | 138°C |
| colour | 18 |
| viscosity | 0.28 dPa.s. |

### Comparative Experiment A

To 100 parts by weight of the petroleum fraction described in Example I 25 parts by weight of toluene were added and subsequently a polymerization was carried out during 6 hours at 35°C in the presence of 1 weight percent of gaseous boron trifluoride. After neutralization of the catalyst, filtration and distillation of the solvent and the non-reacted components, the resin, hereinafter referred to as starting resin, had the following properties:

| | |
|---|---|
| acid number | 0 |
| softening point | 160°C |
| colour | 16 |
| viscosity | 0.3 dPa.s. |

### Example III

To 100 parts by weight of the starting resin, 20 parts by weight of xylene were added, and the temperature of the mixture was raised to 145°C. Subsequently, 5 parts by weight of tall oil fatty acid, which contained about 45 wt.% oleic acid and 53 wt.% linoleic acid, and 1 wt.% of ditertiary butylperoxide were added to this mixture. The mixture was kept at 145°C during 3 hours.
After distillation, a resin with the following properties was obtained:

| | |
|---|---|
| acid number | 7.5 |
| softening point | 145°C |
| colour | 18 |
| viscosity | 0.37 dPa.s. |

### Example IV

20 Parts by weight of xylene were added to 100 parts by weight of the starting resin according to Comparative Experiment A. Subsequently, 10 parts by weight of tall oil fatty acid were added to this mixture, and then 1 wt.% of ditertiary butylperoxide. This mixture was kept at 145°C during 3 hours. Subsequently, this mixture was heated to 220°C and 30 parts by weight of resol resin were added. After removal of the volatile components by distillation, a product with the following properties was obtained:

| | |
|---|---|
| acid number | 12 |
| softening point | 150°C |
| colour | > 18 |
| viscosity | 0.57 dPa.s. |

### Example V

To 100 parts by weight of the starting resin obtained in Comparative Experiment A, 20 parts by weight of xylene and 10 parts by weight of tall oil fatty acid were added. This mixture was heated to 145°C, after which 1 wt.% ditertiary butylperoxide was added and the mixture was kept at 145°C during 2 hours. The mixture was subsequently cooled to 100°C, after which 1 part by weight of ethanolamine and 30 parts by weight of a resol resin were added. The temperature was raised to 220°C. After removal of the volatile components by vacuum distillation at 220°C, a resin with the following properties was obtained:

| | |
|---|---|
| acid number | 10 |
| softening point | 165°C |
| colour | > 18 |
| viscosity | 0.70 dPa.s |

### Examples VI-XIII and Comparative Experiments B and C: binding agent compositions

### Example VI

To a resin according to Example IV, which was dissolved in an aliphatic hydrocarbon, aluminium chelate was added during 30 minutes at 150°C. The results are presented in Tables 1 and 2, in Table 1 the amount of resin being kept the same, and in Table 2 the viscosity.

In table 2 the advantage of the resin according to the invention is illustrated in decreasing the tack, while maintaining the viscosity. This allows faster drying. In addition, a smaller amount of resin will suffice, which may give a cost advantage.

**TABLE 1**

| Exp. | Resin* | Solvent** | Al-Chelate | Viscosity dPa.s | Yield stress dynes/cm² |
|---|---|---|---|---|---|
| | [parts by weight] | | | | |
| B | 45 | 55 | 0 | 11 | 0 |
| VI | 45 | 54 | 1 | 40 | 3000 |
| VII | 45 | 53.5 | 1.5 | 70 | 6000 |
| VIII | 45 | 53 | 2 | 140 | 15000 |
| IX | 45 | 52.5 | 2.5 | 240 | 27000 |

| | | | | | |
|---|---|---|---|---|---|
| * Resin according to Example IV | | | | | |
| ** Haltermann PKWF 4/7: aliphatic solvent (max. 18% aromatics) with a boiling range of 230-260°C | | | | | |

**TABLE 2**

| Exp. | Resin* | Solvent** | Al-Chelate | Viscosity dPa.s | Tack*** |
|---|---|---|---|---|---|
| | [parts by weight] | | | | |
| C | 55 | 45 | 0 | 330 | 480 |
| X | 54 | 45 | 1 | 360 | 400 |
| XI | 51 | 47.5 | 1.5 | 310 | 280 |
| XII | 50 | 48 | 2 | 310 | 200 |
| XIII | 49 | 48.5 | 2.5 | 340 | 130 |

| | | | | | |
|---|---|---|---|---|---|
| * Resin according to Example IV | | | | | |
| ** Haltermann PKWF 4/7: aliphatic solvent (max. 18% aromatics) with a boiling range of 230-260°C | | | | | |
| *** Measured on "Tack-O-Scope" (Rudolph Meyer). | | | | | |

### Examples XIV-XVI and Comparative Experiment D: ink compositions

A concentrated, pigment-containing composition was prepared by mixing of:
30 parts by weight of binding agent
40 parts by weight of pigment (Rubis lithol)
12 parts by weight of alkyd resin (Alsynol 18S)
10 parts by weight of aliphatic solvent (PKWF 4/7).
As binding agent use was made of a 50% solution (in PKWF 4/7) of Sheboffset 68147™ (DSM-Resins, which consists of a polymerized C₉ fraction, rosin and resol resin).

Using the composition containing concentrated pigment and the binding agent compositions according to Table 2, ink compositions as presented in Table 3 were prepared.

**TABLE 3**

| Exp. | Binding agent | Pigment paste | Solvent * | Viscosity ** | Yield stress *** | Optical density | Tack as a function of time |
|---|---|---|---|---|---|---|---|
| D | B | | | 95 | 4000 | 1.30 | 270/495 |
| | 63 | 30 | 7 | | | | 3'30 |
| XIV | XII | | | 100 | 6000 | 1.30 | 250/450 |
| | 63 | 30 | 7 | | | | 2'30 |
| XV | XIII | | | 90 | 7000 | 1.30 | 180/365 |
| | 64 | 30 | 6 | | | | 2'30 |
| XVI | XIII | | | 100 | 5000 | 1.30 | 140/270 |
| | 60 | 30 | 10 | | | | 2' |

| | | | | | | | |
|---|---|---|---|---|---|---|---|
| * PKWF 28/31 (Haltermann), aliphatic hydrocarbons with a boiling range between 280-310°C (max. 18% aromatics) | | | | | | | |
| ** Laray (dPa.s) | | | | | | | |
| *** (dynes/cm²) | | | | | | | |

The inks dry faster if a gelated binding agent composition is used.

## Claims

1. Resin composition on the basis of substantially vinyl aromatic hydrocarbon monomers with 8-12 carbon atoms and acids, characterized in that the resin composition contains 4-20 wt.% of an alkyl group with 12-24 carbon atoms and obtainable by ionic or radical polymerisation of the vinylaromatic resin or vinylaromatic monomers in the presence of unsaturated fatty acids.

2. Resin composition according to claim 1, characterized in that the resin composition has an acid number below 30 mg KOH/gr.

3. Resin composition according to claim 2, characterized in that the resin composition has an acid number that is 1-14 mg KOH/gr.

4. Resin composition according to any one of claims 1-3, characterized in that the resin composition contains 8-15 wt.% of an alkyl group with 12-24 carbon atoms.

5. Resin composition according to any of claims 1-4, characterized in that the resin composition contains an aluminium-containing soap, an aluminium-containing alkoxide, an aluminium chelate or an oxyaluminium acylate, or mixtures thereof.

6. Printing ink composition on the basis of the resin composition according to any of claims 1-5.

## Patentansprüche

1. Harzzusammensetzung auf der Basis von im wesentlichen vinylaromatischen Kohlenwasserstoffmonomeren mit 8-12 Kohlenstoffatomen und Säuren, dadurch gekennzeichnet, daß die Harzzusammensetzung 4-20 Gew.-% einer Alkylgruppe mit 12-24 Kohlenstoffatomen enthält und erhältlich ist durch ionische oder radikalische Polymerisation des vinylaromatischen Harzes oder vinylaromatischer Monomere in Gegenwart ungesättigter Fettsäuren.

2. Harzzusammensetzung nach Anspruch 1, dadurch gekennzeichnet, daß die Harzzusammensetzung eine Säurezahl von unter 30 mg KOH/g aufweist.

3. Harzzusammensetzung nach Anspruch 2, dadurch gekennzeichnet, daß die Harzzusammensetzung eine Säurezahl von 1-14 mg KOH/g aufweist.

4. Harzzusammensetzung nach einem der Ansprüche 1 bis 3, dadurch gekennzeichnet, daß die Harzzusammensetzung 8-15 Gew.-% einer Alkylgruppe mit 12-24 Kohlenstoffatomen enthält.

5. Harzzusammensetzung nach einem der Ansprüche 1 bis 4, dadurch gekennzeichnet, daß die Harzzusammensetzung eine Aluminium enthaltende Seife, ein Aluminium enthaltendes Alkoxid, ein Aluminiumchelat oder ein Oxyaluminiumacylat, oder Gemische davon enthält.

6. Druckfarbenzusammensetzung auf der Basis der Harzzusammensetzung gemäß einem der Ansprüche 1 bis 5.

## Revendications

1. Composition de résine à base de monomères d'hydrocarbones aromatiques substantiellement vinyliques avec 8-12 atomes de carbone et acides, caractérisés par le fait que la composition de résine contient 4-20 % en poids d'un groupe alkyle avec 12-24 atomes de carbone et que l'on peut obtenir par polymérisation ionique ou radicalaire de la résine vinylaromatique ou des monomères vinylaromatiques en présence d'acides gras insaturés.

2. Composition de résine conforme à la revendication 1, caractérisée par le fait que la composition de la résine a un indice d'acide inférieur à 30 mg de KOH/gr.

3. Composition de résine conforme à la revendication 2, caractérisée par le fait que la composition de la résine a un indice d'acide qui est 1-14 mg de KOH/gr.

4. Composition de résine conforme aux revendications 1-3, caractérisée par le fait que la composition de la résine contient 8-15 % en poids d'un groupe alkyle avec 12-24 atomes de carbone.

5. Composition de résine conforme à toute revendications de 1 à 4, caractérisée par le fait que la composition de la résine contient un savon qui contient aluminium, un alkoxyde qui contient aluminium, un chelate d'aluminium ou un acylate d'oxyaluminium, ou des mélanges de ceux-ci.

6. Composition d'encre d'imprimerie à base de la composition de résine conformément à toute revendication de 1 à 5.
